# EUROPÄISCHE PATENTSCHRIFT

(11) **EP 3 726 966 B1**
(45) Veröffentlichungstag und Bekanntmachung des Hinweises auf die Patenterteilung: **10.01.2024**
(21) Anmeldenummer: 18811455.7
(22) Anmeldetag: 15.11.2018
(51) Int. Cl.: A01K 1/02

(54) **VERFAHREN ZUR AUFZUCHT VON SCHWEINEN**
METHOD FOR REARING PIGS
PROCÉDÉ D'ÉLEVAGE DE PORCS

(30) Priorität: 20.12.2017 DE 102017130791
(43) Veröffentlichungstag der Anmeldung: 28.10.2020
(73) Patentinhaber: H. Bröring GmbH & Co. KG, 49413 Dinklage (DE); Big Dutchman International GmbH, 49377 Vechta (DE)
(72) Erfinder: BRÖRING, Heiner, 49413 Dinklage (DE)
(74) Vertreter: Deters, Frank
(86) Internationale Anmeldenummer: PCT/EP2018/081360
(87) Internationale Veröffentlichungsnummer: WO 2019/120787

(56) Entgegenhaltungen:
- EP-A2- 0 394 808
- WO-A1-86/06581
- WO-A1-95/12305
- DE-B- 1 212 770

## Beschreibung

Die Erfindung betrifft ein Verfahren zur Aufzucht von Schweinen in einem Stall mit zumindest einer Buchteneinheit. Das Verfahren umfasst die Schritte des Einstallens einer bereits trächtigen Sau in die Buchteneinheit, des Absetzens der Ferkel frühestens drei Wochen, nachdem die Sau Ferkel geworfen hat, und des Ausstallens der Sau aus der Buchteneinheit.

Bei europäischen Schweinezuchtbetrieben ist es üblich, dass die trächtige, d. h. tragende Sau wenige Tage vor dem Werfen, d. h. Gebähren der Ferkel in die Buchteneinheit eingestallt wird. Einstallen bedeutet dabei, dass die Buchteneinheit zum ständigen Lebensraum der Sau wird. Nach dem Werfen innerhalb der Buchteneinheit leben die Ferkel für zumindest drei Wochen zusammen mit der Sau in der Buchteneinheit. Sau und Ferkel können die Buchteneinheit dabei aufgrund ihrer räumlichen Umgrenzung nicht aus eigener Kraft verlassen.

Üblicherweise werden die Ferkel anschließend, drei bis fünf Wochen nach dem Werfen, von der Sau abgesetzt. Die Ferkel haben dabei im Mittel ein Körpergewicht von fünf bis acht Kilogramm. Zum Absetzen werden sowohl die Sau als auch die Ferkel aus der Buchteneinheit ausgestallt, d.h. ihr Lebensraum aus der Buchteneinheit hinausverlagert, und die Ferkel räumlich von der Sau getrennt. Die Sau wird in der Folge in einem Deckstall für einen folgenden Wurf erneut besamt. Die Ferkel werden nach dem Absetzen in vom Wurf abweichenden Gruppen in einem von der Buchteneinheit abweichenden Stallbereich gehalten, in dem sie bis zum Erreichen eines Körpergewichtes von 25 kg bis 30 kg leben.

Nach Erreichen dieses Körpergewichtes werden die Ferkel üblicherweise ein weiteres Mal ausgestallt und in einen sogenannten Maststall eingestallt, der entweder Teil desselben Schweinezuchtbetriebes ist oder zu einem auf Schweinemast spezialisierten Betrieb gehört. Im Maststall werden die ehemaligen Ferkel als Mastschweine bezeichnet und leben hier bis zum Erreichen ihres Schlachtgewichtes zwischen 110 kg und 125 kg.

Aus der DE 1212770 ist eine Schweinezuchtstall bekannt, bei dem die Ferkel nach dem Ferkeln noch einige Zeit in einem Ferkelbereich untergebracht sind, der durch ein Gatter als Unterteilungselement getrennt neben einem Sauenbereich angeordnet ist, in dem sich die Muttersau befindet. Die Ferkel können das Gatter nur mit den Köpfen, nicht aber mit dem ganzen Körpern passieren.

Aufgabe der vorliegenden Erfindung ist es, ein alternatives Verfahren zur Aufzucht von Schweinen bereitzustellen, bei dem das Wohlbefinden der Ferkel und die Wirtschaftlichkeit der Haltung verbessert sind.

Erfindungsgemäß wird die Aufgabe durch ein Verfahren der eingangs genannten Art gelöst, und gemäß dem kennzeichnenden Teil des unabhängigen Anspruchs 1, bei dem die Ferkel innerhalb der Buchteneinheit solange gemästet werden, bis sie aus der Buchteneinheit als Schlachtschweine schlachtreif, jeweils mit einem Schlachtgewicht von mindestens 110 kg, insbesondere mindestens 120 kg, ausgestallt werden. Dabei wird der Ferkelbereich zwischen dem Schritt des Absetzens und dem Schritt des Ausstallens der Schlachtschweine durch eine Umstellung des Unterteilungselementes sukzessive unter Verkleinerung des Sauenbereiches vergrößert.

In Untersuchungen hat sich herausgestellt, dass Ferkel, wenn sie nach dem Absetzen in einen bisher fremden Stallbereich eingestallt werden, einen signifikanten Stress erfahren. Stressfaktoren sind dabei die fehlende Möglichkeit der Interaktion mit der Sau sowie das Zusammenleben mit bisher unbekannten Artgenossen. Weitere Stressursache ist die von der Buchteneinheit abweichende mikrobiologische Umgebung nach dem Absetzen, durch welche das Immunsystem der Ferkel belastet wird.

Dadurch, dass beim Absetzen die Ferkel und die Sau zwar körperlich durch das Unterteilungselement getrennt werden, sie jedoch weiterhin in derselben Buchteneinheit gehalten werden, können Nachteile, welche beim konventionellen Absetzen auftreten, vermieden werden. Sowohl die Sau als auch die Ferkel verbleiben längerfristig in dieser Umgebung und treten somit auch nach dem Absetzen weiterhin miteinander in Kontakt.

Der Ferkelbereich wird erfindungsgemäß zwischen dem Schritt des Absetzens und dem Schritt des Ausstallens der Schlachtschweine durch eine Umstellung des Unterteilungselementes sukzessive vergrößert. Damit einhergehend ist eine Verkleinerung des Sauenbereichs. Über einen Zeitraum von mehreren Wochen bzw.

Monaten wird somit der Ferkelbereich entsprechend dem wachsenden Platzbedarf der an Gewicht zunehmenden Ferkel vergrößert. Zur Vergrößerung wird das Unterteilungselement stufenlos oder kleinschrittig innerhalb der Buchteneinheit verstellt. Durch die sukzessive Verstellung wird für die Ferkel zu jeder Zeit ein ihrer Größe entsprechendes Platzangebot bereitgestellt, ohne die Gesamtgröße der Buchteneinheit zu verändern. Bei optimalem Auslauf fühlen sich die Ferkel so dauerhaft besonders wohl. Weiterer Vorteil der Änderung des Verhältnisses von Sauenbereich und Ferkelbereich ist, dass die Sau nach dem Absetzen einen maximal möglichen Platz und damit Auslauf genießt.

Bevorzugt befindet sich das Unterteilungselement schon vor dem Absetzen, insbesondere dauerhaft, in der Buchteneinheit. Bis zum Absetzen wirkt das Unterteilungselement dabei als ein Beschränkungselement zur Beschränkung des Sauenbereichs in der Buchteneinheit. Das Beschränkungselement bewirkt, dass der Sauenbereich sich vor dem Absetzen der Ferkel nicht auf die komplette Buchteneinheit erstreckt. Insbesondere wird die Buchteneinheit durch das Beschränkungselement in einen Sauenbereich und einen freien Bereich, in dem sich keine Tiere befinden, getrennt. So wird bewirkt, dass der Kot der Sau nur mit einem begrenzten Bereich der Buchteneinheit in Kontakt kommen kann und dass nicht die gesamte Buchteneinheit dadurch beschmutzt wird. Des Weiteren sorgt das Beschränkungselement nach dem Werfen dafür, dass sich die Ferkel nicht zu weit von der Sau entfernen können. Das steigert das Tierwohl insofern, als dass die Ferkel verstärkt von der durch die Sau erzeugten Wärme profitieren und sich gegenseitig in größerem Umfang wärmen. In diesem bevorzugten Fall leben vor dem Absetzen sowohl die Sau als auch die Ferkel gemeinsam im Sauenbereich der Buchteneinheit und nach dem Absetzen die Ferkel im Ferkelbereich und die Sau im Sauenbereich, wobei Ferkelbereich und Sauenbereich dann durch das Unterteilungselement getrennt sind.

Das Unterteilungselement wird in einer alternativen bevorzugten Ausführungsform erst beim Absetzen in die Buchteneinheit eingesetzt, wobei es die Buchteneinheit durch das Einsetzen in den Ferkel- und den Sauenbereich unterteilt. In dieser alternativen Ausführungsform erstreckt sich der Sauenbereich vor dem Absetzen auf die gesamte Buchteneinheit, wodurch die Sau einen größeren Auslauf hat.

In Versuchen hat sich gezeigt, dass dadurch sowohl die Ferkel als auch die Sau weniger Stresssymptome zeigen und die Ferkel insbesondere eine größere Gewichtszunahme für die Zeit nach dem Absetzen zeigen. Gleichwohl wird durch die Verhinderung des körperlichen Kontaktes der Ferkel mit der Sau, insbesondere der Ferkel mit dem Gesäuge der Sau, der Neubeginn des Sexualzyklus der Sau als Effekt des Absetzens zuverlässig erreicht. Die erfindungsgemäße Form des Absetzens bringt die Sau zuverlässig in die sog. Rausche, in der die Sau für ihren nächsten Wurf erneut besamt werden kann. Die Ferkel werden auch als Mastschweine innerhalb der Buchteneinheit gehalten und verlassen sie letztendlich erst mit Erreichen ihrer Schlachtreife, wodurch auch ein etwaiges zweites Umstallen vermieden wird.

Überraschenderweise hat sich herausgestellt, dass sich bei den Ferkeln, wenn sie während ihrer Aufzucht nicht umgestallt werden, aufgrund des signifikant geringeren Stresses eine deutlich höhere mittlere Gewichtszunahme verzeichnen lässt, welche auf ihr gesteigertes Wohlbefinden zurückgeht. Darüber hinaus sorgt die mikrobiologische Umgebung innerhalb der Buchteneinheit, von welcher die Ferkel bis zur Erreichung ihres Schlachtgewichts umgeben sind, für eine deutlich geringere Anfälligkeit für Krankheiten und damit eine niedrigere Sterberate. Die Gesundheit der Tiere wird weiterhin dadurch verbessert, dass sie bis zur Erreichung der Schlachtreife nur mit Tieren in Kontakt sind, welche zu ihrem Wurf gehören und die somit gleichzeitig durch die Sau zur Welt gebracht wurden. Ein Verschleppen von Krankheiten innerhalb eines Stalles durch Mischen der Würfe beim Absetzen wird durch das erfindungsgemäße Verfahren verhindert. Insgesamt wird das Wohlbefinden der Ferkel durch das Aufzuchtverfahren deutlich verbessert.

Weiterhin hat sich gezeigt, dass die Sau, welche auch nach dem Absetzen in Interaktion mit ihren Ferkeln bzw. den daraus werdenden Mastschweinen tritt, auf die Entwicklung derer einen positiven Einfluss hat. Insbesondere haben Geräusche, die die Sau beim Fressen erzeugt, einen positiven Einfluss auf das Fressverhalten ihrer Ferkel. Somit wird durch das erfindungsgemäße Verfahren nicht nur der Stress verhindert, welcher bei üblichen Aufzuchtverfahren zu einer Stagnation der Gewichtszunahme der Ferkel führt, sondern zu dem das Fressverhalten der Ferkel nach dem Absetzen aktiv verbessert. Bei Nutzung moderner Fütterungssysteme können die Ferkel unter Anwendung des erfindungsgemäßen Aufzuchtverfahrens ihr Schlachtgewicht in weniger als 160 Tagen nach ihrer Geburt erreichen. Die Zucht der Ferkel bzw. Schweine ist hiermit besonders wirtschaftlich.

Bevorzugt wird die Sau nach dem Absetzen der Ferkel und vor dem Ausstallen der Sau innerhalb des Sauenbereichs erneut besamt. Vorteilhaft an der Besamung der Sau innerhalb der Buchteneinheit ist, dass die Sau zum optimalen Zeitpunkt nach dem Absetzen besamt werden kann und über den Zeitpunkt hinaus in der Nähe, insbesondere in Hörweite ihrer Ferkel bleibt. Durch die verlängerte Haltung der Sau innerhalb des Sauenbereiches können die positiven Effekte der Sau auf die Ferkel besonders lange beobachtet werden, was zum Wohlbefinden der Ferkel weiter beiträgt.

Besonders bevorzugt wird die Sau zwischen vier und sieben Tagen nach dem Absetzen der Ferkel erneut besamt. In dieser Zeit nach dem Absetzen ist die Sau besonders fruchtbar und die Chance der erfolgreichen Befruchtung zur Ausbildung eines folgenden Wurfes Ferkel besonders hoch. Ein folgender Wurf der Sau steigert wiederum die Wirtschaftlichkeit des Betriebes.

Weiterer Vorteil des zeitnahen Besamens der Sau nach dem Absetzen innerhalb der Buchteneinheit ist, dass ein sog. Deckstall, in den die Sau nach dem Absetzen zur Besamung üblicherweise eingestallt wird, bei der Nutzung des erfindungsgemäßen Verfahrens unnötig wird. Stattdessen wird die Sau im befruchteten Zustand unmittelbar aus dem Sauenbereich der Buchteneinheit in einen sog. Wartestall umgestallt, indem sie einen wesentlichen Teil der Phase, während derer sie trächtig ist, verbringt.

Zusätzlich zum Deckstall, welcher in dieser Ausgestaltung des Verfahrens wegfällt, fällt wenigstens ein weiterer Stallbereich weg, in den die Ferkel üblicherweise nach dem Absetzen eingestallt werden. Dadurch ist eine geringere Zahl an Stallbereichstypen sowohl zu errichten als auch während des Verfahrens zu unterhalten. Dadurch können signifikante Kosten eingespart werden.

In einer bevorzugten Ausgestaltung der Erfindung findet das Ausstallen der Sau wenigstens 50 und höchstens 90 Tage, insbesondere wenigstens 70 und höchstens 80 Tage, nachdem die Sau Ferkel geworfen hat, statt. Bei der sukzessiven Vergrößerung des Ferkelbereiches, welcher beim Ausstallen der Schlachtschweine den gesamten Bereich der Buchteneinheit ausmacht, ist nach dem genannten Zeitraum ab dem Werfen der Ferkel ein Punkt erreicht, an dem der Sauenbereich eine Größe hat, die dem minimalen Platzbedarf der Sau entspricht. Vor einer weiteren Verstellung des Unterteilungselementes wird deshalb die Sau ausgestallt. Bei einem derartigen zeitlichen Abstand zwischen dem Werfen der Ferkel und dem Ausstallen der Sau ist eine Interaktion der Ferkel und der Sau nach dem Absetzen besonders lange möglich und deren beschriebene positive Effekte über einen besonders großen Zeitraum zu beobachten, wobei auch das Wohlbefinden der Sau sichergestellt wird.

In einer vorteilhaften Ausgestaltung der Erfindung werden die Ferkel spätestens 115 Tage, nachdem die Sau erneut besamt wird, aus der Buchteneinheit ausgestallt. Die Ferkel haben somit 115 Tage nach dem erneuten Besamen der Sau, ihrer Muttersau, ihre Schlachtreife erreicht und verlassen als Schlachtschweine die Buchteneinheit. 115 Tage ist die Dauer, die zwischen dem Besamen und dem Werfen einer Sau liegt und für die die Sau in der Regel trächtig ist. Dadurch, dass die Ferkel aus der Buchteneinheit ausgestallt werden, bevor die Sau ihren folgenden Wurf wirft, ist es möglich, dass die Sau den folgenden Wurf entweder innerhalb derselben Buchteneinheit wirft oder zeitgleich mit einer anderen Sau wirft, die zu dem Zeitpunkt in der Buchteneinheit eingestallt ist. Somit ist es möglich, dass alle Säue eines Aufzuchtbetriebes zum selben Zeitpunkt Ferkel werfen, welche in genau den Buchteneinheiten geworfen werden, in welchen auf diejenigen des vorherigen Wurfzeitpunktes derselben Säue geworfen wurden. Dadurch lässt sich der Aufzuchtbetrieb mit maximaler Effizienz und verbesserter Wirtschaftlichkeit führen.

Mit dem erfindungsgemäßen Verfahren ist es möglich, dass alle Sauen eines Zuchtbestandes gleichzeitig besamt werden und werfen, wobei sich zu jedem Zeitpunkt der Zucht innerhalb des Stalles ausschließlich Ferkel einer Altersgruppe befinden. Ausgenommen ist dabei die Phase zwischen dem Verkauf der Schlachtschweine und dem folgenden Werfen von Ferkeln. Daraus geht wiederum eine geringere Krankheitsanfälligkeit der Ferkel hervor, da Krankheiten nicht zwischen Ferkeln unterschiedlicher Altersgruppen verbreitet werden können und sich somit über unterschiedliche Ferkelgenerationen fortpflanzen können. Der Arbeitsaufwand für den oder die Betreiber des Stalles wird deutlich gemindert, da arbeitsintensive Schritte deutlich weniger häufig als nach dem üblichen Verfahren durchgeführt werden müssen und nicht Ferkel unterschiedlicher Altersgruppen nach einer darauf zugeschnittenen Behandlung verlangen.

In einer besonders vorteilhaften Ausgestaltung der Erfindung finden das Absetzen der Ferkel 30 Tage nach dem Werfen und die Besamung der Sau fünf Tage nach dem Absetzen statt. Somit sind 2,43 Würfe pro Sau und Jahr bei einer Zwischenwurfzeit von nur 155 Tagen möglich. Eingerechnet ist dabei eine Zeit zur Reinigung der Buchteneinheit von zwei Tagen nach dem Ausstallen der Ferkel und ein Einstallen der Sau in die Buchteneinheit fünf Tage vor dem Werfen. Diese vorteilhafte Ausgestaltung des erfindungsgemäßen Verfahrens führt zu einer immensen Steigerung der Wirtschaftlichkeit der Schweinehaltung bei einer gleichzeitigen Steigerung des Wohlbefindens der Ferkel und der späteren Mastschweine sowie der Muttersau.

Bevorzugt wird innerhalb der Buchteneinheit spätestens an dem Tag, an dem die Sau die Ferkel wirft, ein Schutzraum um die Sau ausgebildet. Dessen Begrenzung ist zumindest teilweise für die Ferkel durchgängig und für die Sau gänzlich undurchgängig. Die Ferkel können nach ihrer Geburt den Schutzraum, in welchem sich die Sau befindet, insbesondere zum Säugen betreten. Um einer Gefahr des Erdrückens durch die Sau zu entgehen, können die Ferkel sich außerdem außerhalb des Schutzraumes in einem Bereich aufhalten, der von der Sau nicht zu erreichen ist. Somit werden weniger Ferkel durch die Sau erdrückt, wenn diese sich insbesondere nach der Futteraufnahme hinlegt, und die Zahl der überlebenden Ferkel pro Sau gesteigert.

Besonders bevorzugt wird der Schutzraum vor dem Absetzen zurückgebildet. Insbesondere wird er vier bis zehn Tage, nachdem die Sau die Ferkel geworfen hat, zurückgebildet. Nach vier bis zehn Tagen ist das Risiko des Erdrückens von Ferkeln signifikant gesunken, da die Ferkel nach dieser Zeit wesentlich stärker und schneller als unmittelbar nach ihrer Geburt sind. Mit der Rückbildung des Schutzraumes ist entweder Entnahme der Begrenzung aus der Buchteneinheit oder die signifikante Vergrößerung des Schutzraumes gemeint. Vorteil der Rückbildung des Schutzraumes ist eine größere Bewegungsfreiheit der Sau und somit eine Verbesserung ihres Wohlbefindens.

Weitere Einzelheiten und Vorteile der Erfindung sind den nachfolgend beschriebenen schematischen Darstellungen zu entnehmen, es zeigen:
- Fig. 1: eine Buchteneinheit mit einer trächtigen Sau nach dem Einstallen,
- Fig. 2: die Buchteneinheit nach einer anschließenden Ausbildung eines Schutzraumes,
- Fig. 3: die Buchteneinheit nach einer anschließenden Rückbildung des Schutzraumes,
- Fig. 4: die Buchteneinheit nach einem anschließenden Absetzen,
- Fig. 5: die Buchteneinheit nach einer anschließenden Umstellung des Unterteilungselementes,
- Fig. 6: die Buchteneinheit vor einem Ausstallen von Schlachtschweinen.

Die schematischen Darstellungen zeigen unterschiedliche Schritte einer vorteilhaften Ausführungsform des erfindungsgemäßen Verfahrens zur Aufzucht von Schweinen in einem Stall.

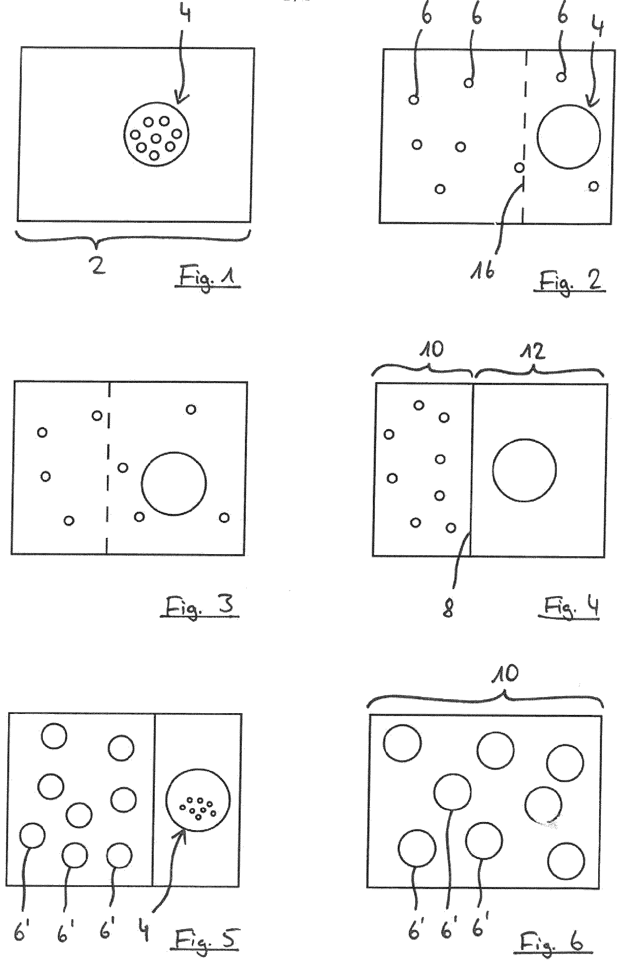

Fig. 1 zeigt schematisch eine Buchteneinheit 2 innerhalb des Stalles, welche durch einer rechteckigen Barriere umgrenzt ist. Die Buchteneinheit 2 umfasst in der dargestellten Ausführungsform des erfindungsgemäßen Verfahrens beim Einstallen einer Sau 4 einen Sauenbereich 12, der durch ein zeitweise als ein Beschränkungselement wirkendes Unterteilungselement 8 beschränkt ist. Dadurch ist der Sauenbereich 12 auf einen Teilbereich der Buchteneinheit beschränkt und insbesondere von einem freien Bereich getrennt. In den Sauenbereich 12 der Buchteneinheit 2 wird eine schematisch dargestellte Sau 4 eingestallt, die zu diesem Zeitpunkt trächtig ist. Fig. 1 zeigt somit den Zustand innerhalb der Buchteneinheit 2, welcher nach dem Einstallen der trächtigen Sau 4 gegeben ist.

Fig. 2 zeigt die Buchteneinheit 2 mit der Sau 4, nachdem diese Ferkel 6 geworfen hat. Die Sau 4 befindet sich innerhalb eines Schutzraumes 16, den sie nicht aus eigener Kraft verlassen kann. Der Schutzraum wird spätestens an dem Tag, an dem die Sau 4 die Ferkel 6 wirft, um die Sau 4 ausgebildet. Der Schutzraum 16 liegt innerhalb des Sauenbereiches 12 und sorgt vorrübergehend dafür, dass die Sau sich nicht im gesamten Sauenbereich 12 bewegen kann. Die Ferkel 6 hingegen können den Schutzraum verlassen und sich im gesamten Sauenbereich 12 bewegen.

Die Ferkel 6 leben vom Werfen bis zum Absetzen mit der Sau 4 im Sauenbereich 12 Fig. 3 zeigt die Buchteneinheit 2, nachdem der Schutzraum 16 rückgebildet worden

ist, insbesondere vier bis zehn Tage nach dem Werfen der Ferkel 6. Die Sau 4 kann sich somit wieder, ebenso wie die Ferkel 6, innerhalb des kompletten Sauenbereiches 12 bewegen.

Fig. 4 zeigt die Buchteneinheit 2, nachdem die Ferkel von der Sau abgesetzt sind. Dazu sind die Ferkel 6 in einen dem Sauenbereich gegenüberliegenden Ferkelbereich 10 gebracht worden. Das Unterteilungselement 8 unterteilt nun die Buchteneinheit in den Sauenbereich 12 und einen Ferkelbereich 10. Somit wird ein Körperkontakt der durch die Sau 4 in der Buchteneinheit 2 geworfenen Ferkel 6 mit der Sau 4 verhindert.

Fig. 5 zeigt die Buchteneinheit 2, nachdem der Ferkelbereich 10 durch eine sukzessive Umstellung des Unterteilungselementes 8 vergrößert wurde. Dabei wurde gleichzeitig der Sauenbereich 12 verkleinert. Außerdem wurde die Sau 4 zwischen vier und sieben Tage nach dem Absetzen im Sauenbereich 12 erneut besamt. Aus den Ferkeln 6 sind Mastschweine 6' geworden. Anschließend wird die Sau 4 50 bis 90, insbesondere 70 bis 80 Tage nach dem Werfen der Ferkel 6 aus der Buchteneinheit 2 ausgestallt.

Fig. 6 zeigt die Buchteneinheit 2, nachdem die Sau 4 aus dieser ausgestallt wurde. Der Ferkelbereich 10 und damit der Lebensraum der Mastschweine 6' entspricht der gesamten Größe der Buchteneinheit 2. Das Unterteilungselement 8 hat innerhalb der Buchteneinheit 2 keine Trennfunktion mehr, der Sauenbereich 12 existiert nicht mehr. Die Mastschweine 6' werden anschließend, spätestens 115 Tage, nachdem die Sau 4 erneut besamt wurde, mit einem Schlachtgewicht von mindestens 110 kg, insbesondere mit mindestens 120 kg als Schlachtschweine aus der Buchteneinheit 2 ausgestallt.

## Patentansprüche

1. Verfahren zur Aufzucht von Schweinen in einem Stall mit zumindest einer Buchteneinheit (2), umfassend die Schritte Einstallen einer bereits trächtigen Sau (4) in die Buchteneinheit (2), Absetzen von Ferkeln (6) frühestens drei Wochen, nachdem die Sau (4) die Ferkel (6) geworfen hat, und Ausstallen der Sau (4) aus der Buchteneinheit (2), **wobei** das Absetzen der Ferkel (6) durch Unterteilen der Buchteneinheit (2) mittels eines Unterteilungselementes (8) zur Ausbildung eines Ferkel- (10) und eines Sauenbereichs (12) dergestalt erfolgt, dass ein Körperkontakt von durch die Sau (4) in der Buchteneinheit geworfenen Ferkeln (6) mit der Sau (4) verhindert wird, **dadurch gekennzeichnet, dass** die Ferkel (6) innerhalb der Buchteneinheit (2) so lange gemästet werden, bis sie aus der Buchteneinheit (2) als Schlachtschweine schlachtreif, jeweils mit einem Schlachtgewicht von mindestens 110 kg, insbesondere mindestens 120 kg, ausgestallt werden, wobei der Ferkelbereich (10) zwischen dem Schritt des Absetzens und dem Schritt des Ausstallens der Schlachtschweine durch eine Umstellung des Unterteilungselementes (8) sukzessive unter Verkleinerung des Sauenbereiches (12) vergrößert wird.

2. Verfahren nach Anspruch 1, **dadurch gekennzeichnet, dass** die Sau (4) nach dem Absetzen der Ferkel (6) und vor dem Ausstallen der Sau (4) innerhalb des Sauenbereiches (12) besamt wird.

3. Verfahren nach Anspruch 2, **dadurch gekennzeichnet, dass** die Sau (2) zwischen vier und sieben Tagen nach dem Absetzen der Ferkel (6) besamt wird.

4. Verfahren nach einem der vorhergehenden Ansprüche, **dadurch gekennzeichnet, dass** die Ferkel (6) spätestens 115 Tage, nachdem die Sau (4) besamt wird, aus der Buchteneinheit (2) ausgestallt werden.

5. Verfahren nach einem der vorhergehenden Ansprüche, **dadurch gekennzeichnet, dass** das Ausstallen der Sau (4) wenigstens 50 und höchstens 90 Tage, insbesondere wenigstens 70 und höchstens 80 Tage, nachdem die Sau (4) die Ferkel (6) geworfen hat, stattfindet.

6. Verfahren nach einem der vorhergehenden Ansprüche, **dadurch gekennzeichnet, dass** spätestens an dem Tag, an dem die Sau (4) die Ferkel (6) wirft, innerhalb der Buchteneinheit (2) ein Schutzraum um die Sau (4) ausgebildet wird, dessen Begrenzung (16) zumindest teilweise für die Ferkel (6) durchgängig und für die Sau (4) gänzlich undurchgängig ist.

7. Verfahren nach Anspruch 6, **dadurch gekennzeichnet, dass** der Schutzraum vor dem Absetzen, insbesondere vier bis zehn Tage, nachdem die Sau (4) die Ferkel (6) geworfen hat, rückgebildet wird.

## Claims

1. Method for rearing pigs in a barn having at least one pen unit (2), comprising the steps of transferring an already pregnant sow (4) into the pen unit (2), weaning piglets (6) no sooner than three weeks after the sow (4) has farrowed the piglets (6), and transferring the sow (4) out of the pen unit (2), the piglets (6) being weaned by dividing the pen unit (2) using a dividing element (8) to form a piglet region (10) and a sow region (12), the weaning being carried out so as to prevent physical contact between the sow (4) and piglets (6) farrowed in the pen unit by the sow (4), **characterized in that** the piglets (6) are fattened in the pen unit (2) until they are ready for slaughter and are transferred out of the pen unit (2) as pigs for slaughter, each having a slaughter weight of at least 110 kg, in particular at least 120 kg, the piglet region (10) being gradually enlarged by moving the dividing element (8), thereby reducing the size of the sow region (12) between the step of weaning and the step of transferring out the pigs for slaughter.

2. Method according to claim 1, **characterized in that** the sow (4) is inseminated in the sow region (12) after the piglets (6) are weaned and before the sow (4) is transferred out.

3. Method according to claim 2, **characterized in that** the sow (2) is inseminated between four and seven days after the piglets (6) are weaned.

4. Method according to any of the preceding claims, **characterized in that** the piglets (6) are transferred out of the pen unit (2) no later than 115 days after the sow (4) is inseminated.

5. Method according to any of the preceding claims, **characterized in that** the sow (4) is transferred out at least 50 days and at most 90 days, in particular at least 70 days and at most 80 days, after the sow (4) has farrowed the piglets (6).

6. Method according to any of the preceding claims, **characterized in that**, before or on the same day on which the sow (4) farrows the piglets (6), a protective region is formed around the sow (4) in the pen unit (2), the boundary (16) of which protective region can be passed through at least in part by the piglets (6) and cannot be passed through by the sow (4) at all.

7. Method according to claim 6, **characterized in that** the protective region is reformed before weaning, in particular four to ten days after the sow (4) has farrowed the piglets (6).

## Revendications

1. Procédé d'élevage de porcs dans une porcherie comportant au moins une unité d'enclos (2), comprenant les étapes consistant à installer une truie (4) déjà gestante dans l'unité d'enclos (2), à sevrer les porcelets (6) au plus tôt trois semaines après que la truie (4) ait mis bas les porcelets (6), et à sortir la truie (4) de l'unité d'enclos (2), le sevrage des porcelets (6) s'effectuant par subdivision de l'unité d'enclos (2) au moyen d'un élément de subdivision (8) pour former une zone (10) pour des porcelets et une zone (12) pour des truies de telle manière qu'un contact corporel des porcelets (6) mis bas par la truie (4) dans l'unité d'enclos par la truie (4) soit empêché, **caractérisé en ce que** les porcelets (6) sont engraissés à l'intérieur de l'unité d'enclos (2) jusqu'à ce qu'ils soient retirés de l'unité d'enclos (2) en tant que porcs prêts à l'abattage, avec un poids d'abattage d'au moins 110 kg, en particulier d'au moins 120 kg, la zone (10) pour les porcelets étant successivement augmentée entre l'étape de sevrage et l'étape de retrait des porcs pour l'abattage en changeant l'élément de subdivision (8), tout en réduisant la taille de la zone (12) pour les truies.

2. Procédé selon la revendication 1, **caractérisé en ce que** la truie (4) est inséminée à l'intérieur de la zone (12) pour les truies après le sevrage des porcelets (6) et avant la sortie de la truie (4).

3. Procédé selon la revendication 2, **caractérisé en ce que** la truie (2) est inséminée entre quatre et sept jours après le sevrage des porcelets (6).

4. Procédé selon l'une des revendications précédentes, **caractérisé en ce que** les porcelets (6) sont sortis de l'unité d'enclos (2) au plus tard 115 jours après que la truie (4) ait été inséminée.

5. Procédé selon l'une des revendications précédentes, **caractérisé en ce que** le retrait de la truie (4) a lieu au moins 50 et au plus 90 jours, en particulier au moins 70 et au plus 80 jours, après que la truie (4) a mis bas les porcelets (6).

6. Procédé selon l'une des revendications précédentes, **caractérisé en ce qu'**un espace de protection est formé autour de la truie (4) à l'intérieur de l'unité d'enclos (2) au plus tard le jour où la truie (4) met bas les porcelets (6), la délimitation (16) de cet espace étant au moins partiellement continue pour les porcelets (6) et totalement impénétrable pour la truie (4).

7. Procédé selon la revendication 6, **caractérisé en ce que** l'espace de protection est reconstitué avant le sevrage, en particulier quatre à dix jours après que la truie (4) a mis bas les porcelets (6).
